# EUROPÄISCHE PATENTSCHRIFT

(11) **EP 2 800 342 B1**
(45) Veröffentlichungstag und Bekanntmachung des Hinweises auf die Patenterteilung: **02.03.2016**
(21) Anmeldenummer: 13166016.9
(22) Anmeldetag: 30.04.2013
(51) Int. Cl.: H04L 29/12

(54) **VERFAHREN UND SYSTEM FÜR EIN ZUSTANDSABHÄNGIGES IP-ADRESSMANAGEMENT**
Method and system for a state-dependent IP address management
Procédé et système de gestion d'adresses IP dépendamment de l'état

(43) Veröffentlichungstag der Anmeldung: 05.11.2014
(73) Patentinhaber: Deutsche Telekom AG, 53113 Bonn (DE)
(72) Erfinder: Messmer, Martin, 13127 Berlin (DE); Mildner, Frank, 64331 Weiterstadt (DE); Friese, Ingo, 14195 Berlin (DE)
(74) Vertreter: Vossius & Partner Patentanwälte Rechtsanwälte mbB

(56) Entgegenhaltungen:
- US-A1- 2007 016 762
- US-B1- 8 375 109
- reinerotto: "hotspot - inactive dhcp leases can deplete the pool of addresses", Mikro Tik , 24. Juli 2011 (2011-07-24), Seiten 1-2, XP002712174, Gefunden im Internet: URL:http://forum.mikrotik.com/viewtopic.ph p?f=2&t=53670 [gefunden am 2013-09-03]
- Andrew von Nagy: "Preventing DHCP Starvation Attacks", Revolution Wi-Fi , 11. März 2011 (2011-03-11), Seiten 1-3, XP002712175, Gefunden im Internet: URL:http://revolutionwifi.blogspot.nl/2011 /03/preventing-dhcp-starvation-attacks.htm l [gefunden am 2013-09-03]
- Anonymous: "DHCP Starvation, A trivial solution", Server Fault , 21. Oktober 2009 (2009-10-21), Seiten 1-3, XP002712176, Gefunden im Internet: URL:http://serverfault.com/questions/76543 /dhcp-starvation-a-trivial-solution [gefunden am 2013-09-03]

## Beschreibung

Die Erfindung betrifft allgemein ein Verfahren für ein Adressmanagement von IP-Adressen (Internet Protokoll Adressen) an einem drahtlosen Netzzugang, bei dem IP-Adressen mit dem Dynamic Host Configuration Protocol (DHCP) vergeben werden.

Insbesondere betrifft die vorliegende Erfindung ein Verfahren sowie ein System zur Verbesserung der Verfügbarkeit von Internet Services an WiFi HotSpots durch ein zustandsabhängiges IP-Adressmanagement.

### Hintergrund der Erfindung

Ein "HotSpot" bzw. "HotSpot-Dienst" ist ein öffentlicher drahtloser Netzzugang/Internetzugriffspunkt, der vorzugsweise für jedermann zugänglich ist (z.B. WLAN (**W**ireless **L**ocal **A**rea **N**etwork bzw. ein **P**ublic WLAN (PWLAN)). Die meisten HotSpots sind im öffentlichen Raum installiert, beispielsweise in Restaurants, Cafes, Hotels, Krankenhäusern oder öffentlichen Plätzen (Flughäfen, Bahnhöfen usw.). Mit einem Notebook, PDA, Tablet-Computer oder Mobiltelefon/Smartphone kann man mittels der WLAN-Technologie eine Verbindung zum Internet aufbauen. Für die Datenübertragung wird meist der IEEE-802.11 b/g/n-Standard verwendet.

Die Aufgabe eines HotSpots besteht unter anderem darin, Benutzern einen einfachen Zugang zum Internet bzw. bestimmten Internet Diensten zu ermöglichen und dafür die erforderliche Freischaltung der Benutzer durchzuführen. Dafür werden mehrere Komponenten und Funktionen benötig. Zunächst wird ein WLAN-Access-Point/Netzzugang benötigt, mit dem ein Benutzer mit seinen WLAN-Geräten zunächst einen Zugriff auf das lokale Netzwerk erhält. Zudem muss eine Schnittstelle zwischen diesem WLAN und dem Internet vorhanden sein. Auch findet eine Überprüfung statt, wer ins Internet gelangen darf. Für den Fall, dass ein Benutzer noch nicht angemeldet ist, wird üblicherweise sein Web-Browser automatisch auf eine Anmeldeseite geleitet. Dort kann er sich mittels Eingabe eines Codes und/oder Passwortes authentifizieren. Der eingegebene Code wird anhand einer Datenbank überprüft und der Benutzer freigeschaltet. Die Anmeldung aktiviert üblicherweise einen Timer, der sicherstellt, dass der Zugang nach Ablauf der gebuchten Zeit bzw. nach Verstreichen einer vorgegebenen Inaktivitätszeit endet und gesperrt wird.

Das Anmelden des Geräts am HotSpot und das anschließende Login werden beispielhaft mit den Folgenden Schritten stichpunktartig beschrieben. Hierbei ist jedoch zu beachten, dass abhängig von der speziellen Implementierung eines HotSpots weniger bzw. weitere Schritte nötig sein können.
1. Der drahtlose Netzzugang (meistens WLAN, WiFi, HotSpot) ist meistens nicht gesichert durch Zugangsdaten und kann von allen kompatiblen Geräten (beispielsweise IEEE-802.11 b/g/n-Standard) in Funkreichweite genutzt werden.
2. Die Nutzung des drahtlosen Netzzugangs erfordert üblicherweise eine IP-Adresse, die dem eingebuchten Gerät (i.d.R. drahtloses Endgerät, WLAN Endgerät/WLAN Client) durch einen netzseitigen Autokonfigurationsdienst wie DHCP (Dynamic Host Configuration Protocol) für eine begrenzte Zeit (*DHCP Lease-Time,* oder "lease time", "Mietzeit") zur Verfügung gestellt wird. Die Autokonfiguration der IP-Adresse des Endgeräts erfolgt als einer der ersten Schritte nach Herstellung des Netzzuganges.
3. Der Netzzugang alleine erlaubt dem Nutzer meist noch nicht den Zugriff auf das Internet, sondern lediglich die Nutzung von IP-basierten Basisdiensten des HotSpot-Betreibers.
4. Hierzu zählen insbesondere IP-basierte Login/Logout-Services, welche es dem Nutzer ermöglicht, sich für eine Dienstnutzung anzumelden und wieder abzumelden.
5. Durch die Anmeldung über einen Login-Service wird die IP-Adresse des Endgeräts mit der Nutzerkennung des Nutzers verknüpft und eine HotSpot-Sitzung (Session = Tupel (Nutzer, IP@)) eröffnet. Innerhalb dieser Session erhält der Nutzer über das zur Anmeldung verwendete Endgerät Zugriff auf das Internet bzw. Internet Dienste.
6. Die Session wird beendet durch explizites Abmelden beim Logout-Service oder nach einer netzseitig vordefinierten Inaktivitätszeit (*Idle Disconnect Timeout).*
   Folgende Randbedingungen sind üblicherweise für den Betreiber des HotSpots zu beachten:
7. Eine (private oder öffentliche) IP-Adresse darf zu einer Zeit immer nur einem Gerät zugeordnet sein. Beispielsweise gelten zur eindeutigen Identifizierung eines Nutzer bei Internetnutzung Verpflichtungen gemäß dem Telekommunikationsgesetz (TKG), Telemediengesetz, etc..
8. Werden von einem Betreiber eine große Anzahl von HotSpots betrieben, so werden normalerweise - aber nicht zwingend - bestimmte Funktion des HotSpot-Dienstes zentralisiert. Hierzu zählen i.d.R. der Login/Logout-Service, die Nutzerauthentisierung (AAA, Authentication, Authorization and Accounting), Dienstzugangskontrolle (Service Access Control) und ggf. der DHCP-Service.
9. In einem Szenario mit zentralisierten HotSpot-Funktionen werden die für Endgeräte verfügbaren IP-Adressen üblicherweise in Pools verwaltet. Die einzelnen IP-Adressen sind vorzugsweise jeweils einer einzigen Lokation zugeordnet, damit aus den erfassten Nutzungsdaten eine eindeutige Zuordnung zur besuchten Lokation möglich ist (vereinfacht beispielsweise das IP-Routing und Revisionssicherheit bei Kundenfragen zu Nutzungsdaten).
10. Aufgrund des offenen Zugangs ist die Anzahl der gleichzeitig im Netz eingebuchten Geräte eines HotSpots nicht vorhersagbar und nicht deterministisch, unterliegt jedoch üblicherweise einer tageszeitabhängigen Verteilungskurve.
11. Aus Kompatibilitätsgründen ist an HotSpots vorzugsweise das IPv4-Protokoll mit seinen knappen Adressen zu unterstützen. Zudem kann auch darauf zu achten sein, das IPv6 zu unterstützen.
12. Eine IP-Adresse, die einer aktiven HotSpot-Session (und damit einem Nutzer A mit Gerät A') zugeordnet ist, darf erst wieder neu an ein zweites Gerät (B') vergeben werden, wenn die aktive Session (A) beendet wurde. Ansonsten würde das zweite Gerät B' von Nutzer B aufgrund der identischen IP-Adresse der aktiven Session von Nutzer A zugeordnet und somit könnte der Nutzer B ohne weiteres Login den Dienst auf Kosten und im Namen von Nutzer A nutzen.
   Aus 12. ergibt sich eine Abhängigkeit zwischen *Idle Disconnect Timeout* (siehe 6. oben) der HotSpot Session und der zu verwendenden *DHCP Lease Time* (siehe 2. oben). Hierbei gelten vorzugsweise folgende Randbedingungen:
13. Um eine per DHCP erhaltene IP-Adresse weiter nutzen zu können, muss ein Gerät üblicherweise spätestens nach der Hälfte der DHCP Lease-Time (im Folgenden auch einfach als "Lease-Time" bezeichnet) die Weiternutzung der IP-Adresse anfordern (siehe RFC-DHCP; DHCP-Refresh, DHCP renew).
   Gemäß dem Dynamic Host Configuration Protocol (DHCP) gem. IETF RFC 2131 erhält der Client zusammen mit der IP-Adresse in einer DHCP ACK-Nachricht die Lease-Time. Das ist ein Zeitwert, der angibt, wie lange der Client die zugewiesene IP-Konfiguration verwenden darf. Der Standard sieht vor, dass der Client nach der Hälfte der Lease-Zeit einen erneuten DHCP REQUEST sendet und so bekundet, dass weiteres Interesse an der reservierten IP-Adresse besteht. Der Server sollte dann in der Regel ein DHCP ACK mit identischen Daten wie vorher und einer erneuten gleichen Lease-Time senden. Damit gilt die IP-Adresse als verlängert.
14. Ein Login erfolgt also vor Ablauf der halben DHCP Lease-Time.
15. Damit kann für die Festlegung der DHCP Lease-Time folgende Relation angegeben werden:
   DHCP Lease Time ≥ 2 * Idle Disconnect Time
16. Wird die DHCP Lease-Time kürzer gewählt, kann die Neuvergabe der IP-Adresse bereits innerhalb der Laufzeit einer noch aktiven Session der IP-Adresse erfolgen, was der Forderung 12. widerspricht.
17. Die Idle Disconnect Time sollte einen guten Kompromiss aus Komfortsicht (der Kunde sollte sich nicht ständig neu einloggen müssen) und aus Kostensicht (bei Per-Minute Tarifen) darstellen. Gemäß der Relation aus 15. oben, ergibt sich beispielsweise bei einem Idle Disconnect von 15 Minuten eine DHCP Lease Time von 30 Minuten.

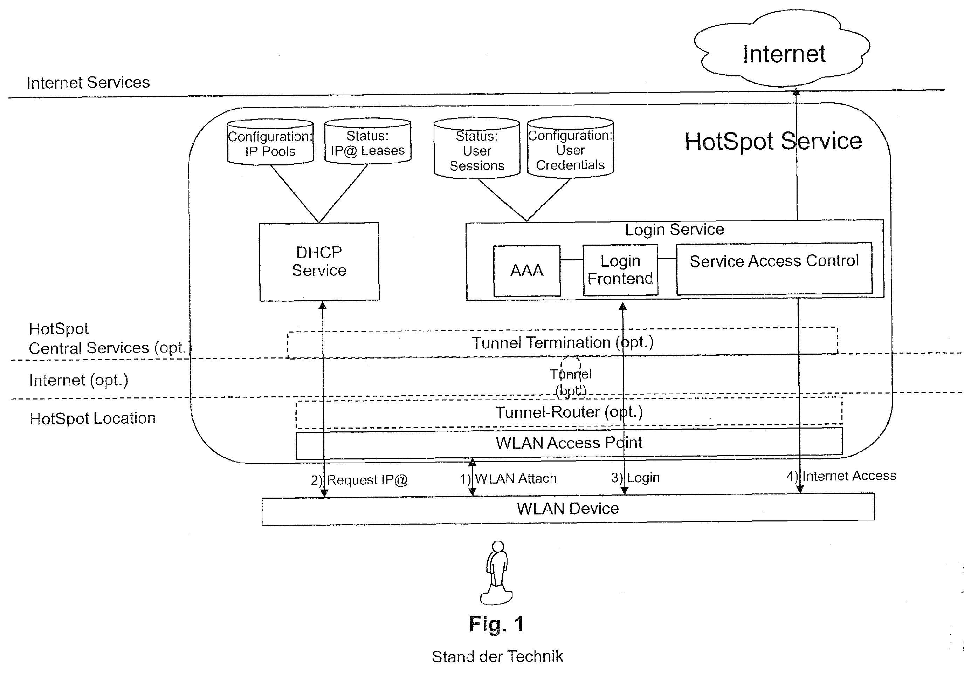

Figur 1 zeigt schematisch ein übliches HotSpot-Szenario sowie den Ablauf nötiger Aktionen 1) - 4) bis zur Internetnutzung in verkürzter schematischer Version (in Fig. 1 verwendete Begriffe werden im Text unten in ***fett kursiv*** Schrift dargestellt).
1) Der Zugang zum drahtlosen Netzzugang **(*WLAN Access Point)*** ist nicht gesichert durch Zugangsdaten und kann von allen kompatiblen WLAN Geräten **(*WLAN Device*)** in Funkreichweite genutzt werden **(*WLAN Attach).***
2) Die Nutzung des Netzzugangs erfordert eine IP-Adresse, die dem eingebuchten WLAN Device durch einen netzseitigen Autokonfigurationsdienst wie DHCP Service für eine begrenzte Zeit (DHCP Lease-Time) zur Verfügung gestellt wird. Die Zuweisung dieser IP-Adresse erfolgt üblicherweise über einen "Request" **(*Request IP@*)** der vom WLAN Device ausgesendet wird.
3) Der Netzzugang alleine erlaubt dem Nutzer noch nicht den Zugriff auf das Internet (in Fig. 1 als Wolke dargestellt). Durch die Anmeldung über den ***Login-Service*** wird die IP-Adresse des Endgeräts mit der Nutzerkennung des Nutzers verknüpft und eine HotSpot-Sitzung (Session = Tupel(Nutzer, IP@)) eröffnet (siehe Fig. 1 ***Login*).**
4) Nach erfolgreicher Authentifizierung über AAA erhält der Nutzer nun Zugriff (Service Access Control) auf das Internet **(*Internet Access*).**

Ein "Walk-By" Gerät ist im Sinne der vorliegenden Anmeldung ein drahtloses Endgerät (z.B. WLAN Smartphone, Laptop, Tablet-Computer, usw.), welches (i.d.R. unbeabsichtigt) Ressourcen des HotSpots - insb. eine IP-Adresse - belegt, ohne tatsächlich Dienste wie z.B. Internet Services zu nutzen. Da eine Internetnutzung durch den Nutzer eines solchen Geräts nicht beabsichtigt ist, erfolgt auch kein HotSpot Login und es wird somit auch keine HotSpot-Session für das Endgerät bzw. den Nutzer eröffnet.

Insbesondere an stark frequentierten HotSpot Lokationen im öffentlichen Raum mit hoher Nutzerfluktuation (Einkaufsstraßen, Strandpromenaden, Ampelkreuzungen, Bahnhöfen, Flughäfen, etc.) kommt es aufgrund von Merkmal 1. schnell zu großen Mengen von Walk-by Geräten. Hierdurch kann es aufgrund von Merkmal 10., der beschränkten Anzahl der verfügbaren IP-Adressen in einem HotSpot (siehe auch Punkte 7., 9. und 11.) und der relativen langen DHCP Lease-Time (siehe 15. und 17.) schnell zu Situationen kommen, in denen alle verfügbaren IP-Adressen des HotSpots belegt sind. Betritt nun ein Nutzer, der mit seinem WLAN Gerät tatsächlich Internet-Dienste im HotSpot nutzen möchten (sozusagen ein "Walk-In" Gerät), den HotSpot-Bereich, wird sein Endgerät keine IP-Adresse bekommen und der Nutzer kann keine Internetdienste nutzen. Diese Situation entschärft sich auch nicht durch Aufstellen mehrere HotSpots in regelmäßigen Abständen entlang des stark frequentierten Bereichs, da jedes Walk-By Gerät an allen HotSpots das gleiche Verhalten zeigt und somit auch an allen weiteren HotSpots zu einer entsprechenden Verknappung der IP-Adressen beiträgt.

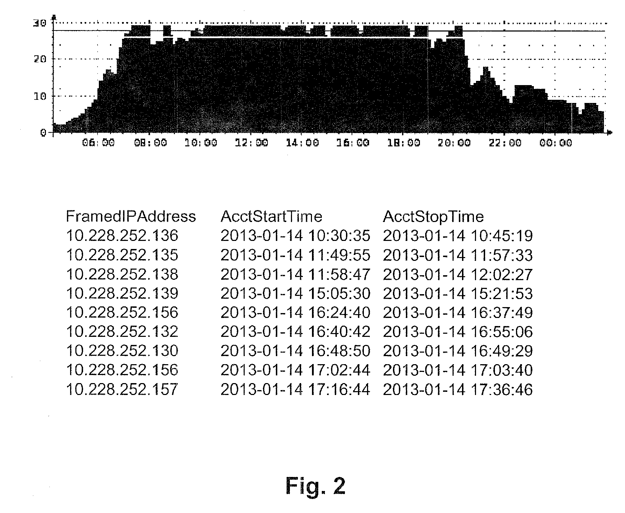

Figur 2 zeigt den für den Walk-By-Effekt typischen Verlauf der IP-Adressauslastung im Vergleich zu den tatsächlichen HotSpot Sessions (von Walk-In Geräten) an einer stark frequentierten HotSpot Lokation im öffentlichen Raum (hier Fußgängerzone): Einer fast vollständigen IP-Pool-Auslastung (hier max. 29 Adressen) zwischen 10:00 Uhr und 18:00 Uhr stehen lediglich 9 HotSpot Sessions gegenüber.

Weitere Probleme im Stand der Technik sind angesprochen von reinerotto in "hotspot - inactive dhcp leases can deplete the pool of addresses", 24. Juli 2011, Seiten 1-2, gefunden unter URL: http://forum.mikrotik.com/viewtopic.php?f=2&t=53670 am 3. September 2013.

Gegenwärtig gibt es mehrere Lösungsansätze für das Problem der Blockierung von HotSpot-Ressourcen durch Walk-by Geräte. Beispielsweise wird durch die Verwendung einer "angemessenen" Adresspoolgröße bzw. durch Ignorieren des Problems das Problem versucht zu lösen bzw. nicht zu lösen. Die Adresspoolgröße wird entsprechend der Wichtigkeit der Lokation gewählt; hierbei werden HotSpots im öffentlichen Raum i.d.R. umgekehrt proportional zu ihrem tatsächlichen Bedarf mit IP-Adressen bedacht. Da eine Erkennung des Problems bei vielen HotSpot-Installationen aufgrund fehlender Monitoring-Funktionalitäten nicht möglich ist, werden viele Walk-by belastete Lokationen nicht erkannt.

Eine weitere Möglichkeit aus dem Stand der Technik ist die Vergrößerung der IP-Pools bei den kritischen Lokationen. Hierbei werden insbesondere Lokationen mit hoher Nutzerfluktuation aber gleichzeitig geringer tatsächlicher HotSpot-Nutzung (wenig HotSpot Sessions) auf größere Adressbereiche aufgerüstet.

Die Firma Cisco bietet ein Verfahren "Lite Sessions am ISG" an (siehe beispielsweise http://www.cisco.com/en/US/docs/ios-xml/ios/isg/configuration/xe-3s/isg-wlkby-supp.html). Dieser Ansatz verringert den Ressourcen- (und Lizenz-) Bedarf in dem zentralen Service Access Control System ISG (Internet Service Gateway) für nicht authentisierte (eingeloggte) IP-Adressen, da auch hier Ressourcen pro benutzter IP-Adresse benötigt werden. Es löst aber nicht das Problem der Adressknappheit, da die IP-Adressen bereits vorher durch den DHCP-Server vergeben werden.

Schließlich wird im Stand der Technik auch die Verkürzung der "Idle Disconnect Time" diskutiert. Hiermit kann gleichzeitig die DHCP Lease-Time proportional verkürzt werden. Eine Verkürzung der Idle Disconnect Time ist jedoch für den Nutzer unbequem.

Die Folgen des Walk-By-Effekts sind aus verschiedenen Gründen für den Betreiber der HotSpots unerwünscht. Ein Ignorieren des Walk-By-Effekts führt beispielsweise zu folgenden negativen Effekten:
- Schlechte Ausnutzung der betroffenen HotSpot-Lokationen, d.h. hohe Investitionskosten stehen niedrigen Umsätzen entgegen;
- Abweisen von HotSpot Nutzern obwohl eigentlich Netzwerkkapazitäten vorhanden sind;
- Negative Dienstwahrnehmung durch Kunden (bad user experience);
- Hohe Zahl von Hotlinemeldungen; und
- Ggf. Verlust von Kunden aufgrund schlechter Nutzungsmöglichkeiten.

Die Vergrößerung der IP-Adresspools ist für große HotSpot-Betreiber (insbesondere MNOs; Mobile Network Operators und Carrier) nur in gewissen Grenzen möglich, da selbst die privaten IP-Adressen in der globalen Adressplanung der Betreiber üblicherweise nur einmal vergeben werden und zwar übergreifend für alle Netzzugangsarten (HotSpot, GPRS, UMTS, LTE, DSL,...) um ein eindeutiges Routing zwischen Endgeräte in den unterschiedlichen Zugangsnetzen nicht zu verbauen.

Die Verkürzung des Idle Disconnect Time für HotSpot Sessions kann aufgrund des damit einhergehenden Komfortverlustes für manuell eingeloggte HotSpot-Nutzer nur in geringem Maße (ca. Faktor 2) in Erwägung gezogenen werden. Der erreichte positive Effekt auf die Adressverteilung ist dagegen nicht signifikant.

Es besteht somit der Bedarf für ein alternatives bzw. verbessertes Verfahren eines IP-Adressmanagement, insbesondere zur Verbesserung der Verfügbarkeit von Internet Services an HotSpots. Insbesondere besteht eine Aufgabe der vorliegenden Erfindung darin, ein System und ein Verfahren bereitzustellen, welches die oben beschriebene Adressknappheit in HotSpots durch den Walk-by Effekt vermeidet, vorzugsweise die Service Qualität und Nutzungsmöglichkeiten von HotSpots verbessert, vorzugsweise einfach zu implementieren ist, vorzugsweise keinen oder nur geringen zusätzlicher Aufwand an bestehenden HotSpot Geräten (Access Point / Router) erzeugt und/oder vorzugsweise keine Änderungen an Endgeräten benötigt. Insbesondere soll mit der Erfindung die Nutzung/Kapazitätsauslastung von HotSpots verbessert werden und dadurch das Nutzungserlebnis der Kunden deutlich verbessert werden.

### ZUSAMMENFASSUNG DER ERFINDUNG

Die Aufgaben der Erfindung werden durch die Merkmalskombination der unabhängigen Ansprüche sowie der unten diskutierten Aspekte gelöst. Weitere bevorzugte Ausführungsformen der vorliegenden Erfindung werden in den abhängigen Ansprüchen definiert bzw. in den unten dargestellten Ausführungsformen diskutiert.

Insbesondere soll das erfindungsgemäße System bzw. Verfahren eine Unterscheidung zwischen Walk-By-Geräten und Geräten mit echter Dienstenutzung (im Folgenden als "Walk-In-Gerät") treffen, wobei Walk-In Geräte bevorzugt behandelt werden sollen.

Die Erfinder der vorliegenden Erfindung haben als ein wesentliches Problem der "IP-Adressknappheit durch "Walk-By-Geräte" die in Punkt 12. beschriebene Bedingung erkannt: eine IP-Adresse, die einer aktiven HotSpot-Session zugeordnet ist, darf erst wieder neu vergeben werden, wenn die aktive Session beendet wurde. Zudem stellt auch die unter Punkt 15. beschriebene Implementierungskonsequenz: "DHCP Lease Times ≥ 2 * Idle Disconnect Time" ein wesentliches Problem der EP-Adressknappheit durch Walk-By-Geräte dar. Allerdings ist diese Konsequenz nur für solche IP-Adressen, zu denen eine HotSpot-Session (Walk-In) existiert, unabdingbar.

Die Erfinder haben erkannt, dass die Lease-Time einer IP-Adresse eines Gerätes ohne HotSpot-Session (d.h. ein Walk-By-Gerät; nicht eingeloggt) erfindungsgemäß auch ohne Verletzung von Punkt 12. oben deutlich kürzer gewählt werden kann. Erfindungsgemäß wird hierzu vorzugsweise eine Korrelation bzw. Rückkopplung zwischen dem DHCP-Service und dem HotSpot Login-Service, vorzugsweise anhand der IP-Adresse, hergestellt. Eine solche Korrelation ist momentan in keinem DHCP-Server realisiert noch konzeptionell vorgesehen.

Im Folgenden werden bevorzugte Merkmale zur Lösung des erkannten Problems stichpunktartig diskutiert, wobei zur erfindungsgemäßen Lösung bereits die Realisierung einiger weniger Merkmale reichen und verschiedene Merkmale unterschiedlich kombiniert werden können.

Vorzugsweise verwaltet der DHCP-Service mindestens zwei Lease-Time Parameter, vorzugsweise genau zwei Lease-Time Parameter, anstelle von einem einzelnen Lease-Time Parameter. Vorzugsweise unterscheiden sich die zwei Lease-Time Parameter, wobei ein Lease-Time Parameter größer (längere Zeit/Dauer) ist als der andere Lease-Time Parameter (kürzere Zeit/Dauer). In der weiter unten beschriebenen Ausführungsform wird beispielsweise eine "Default DHCP Lease-Time" und "eine Long DHCP Lease-Time" verwendet. Erfindungsgemäß werden diese beiden verschiedenen Lease-Time Parameter Walk-By-Geräten bzw. Walk-In-Geräten zugewiesen.

Vorzugsweise kommunizieren der DHCP Service und der AAA (Authentication, Authorization and Accounting) miteinander, sodass der DHCP-Service ermitteln kann, ob zu einer IP-Adresse eine HotSpot Session existiert oder nicht. Mit anderen Worten, es wird eine Korrelation bzw. Rückkopplung zwischen DHCP-Service und HotSpot-Login-Service bezüglich des momentanen Zustands der IP-Adresse (mit/ohne HotSpot Session) hergestellt. Die Kommunikation kann erfindungsgemäß durch unterschiedliche Verfahren (Push, Pull, Trigger) realisiert werden, möglich sind beispielsweise (ohne jedoch darauf beschränkt zu sein):
- Abfragen des Status der IP-Adresse beim Login-Service, Service Access Control Service oder einem nach gelagerten AAA Service durch den DHCP-Server (Pull);
- Übermitteln von Login-Events und Logout-Events vom Login Server, Service Access Control Services oder eines nachgelagerten AAA-Servers an den DHCP Service (Trigger);
- Abfragen einer Session Datenbank des Login-Services oder nachgelagerten AAA Services durch den DHCP Service (Pull);
- Übermitteln von Login-Events und Logout-Events vom Login Server, Service Access Control Services oder einem nachgelagerten AAA-Servers an ein DHCP-Lease Datenbank des DHCP-Servers (Push)

Vorzugsweise vergibt der DHCP-Service abhängig vom Zustand der IP-Adresse (mit oder ohne HotSpot Session, d.h. Walk-In oder Walk-By) eine der beiden Lease Time:
- IP-Adresse ohne HotSpot Session (Walk-By) → Default Lease-Time
- IP-Adresse mit HotSpot Session (Walk-In) → Long Lease-Time

Durch geeignete Wahl der erfindungsgemäßen Lease-Time Parameter lässt sich die Belegungsdauer von IP-Adressen durch Walk-By Geräte signifikant (beispielsweise > Faktor 10) reduzieren.

Beispielsweise kann die Long DHCP Lease-Time > 2 * Idle Disconnect Time sein, z.B. 30 Minuten. Die Default DHCP Lease-Time kann beispielsweise verkürzt, bzw. extrem verkürzt sein. Beispielsweise 10 Minuten, 5 Minuten oder sogar nur 1 Minute, was zu einer Verkürzung der Belegungsdauer um bis zu Faktor 30 in diesem Beispiel führen kann. Zudem ist es auch möglich, dass die Default DHCP Lease-Time, also die verkürzte Lease-Time nicht auf einen bestimmten Wert vorbestimmt ist, sondern sich im Laufe einer Walk-By Session dynamisch verändern kann. Beispielsweise kann die Default Lease-Time bei einem ersten Kontakt zwischen HotSpot und WLAN Gerät zunächst am kürzesten sein. Dies wäre beispielsweise vorteilhaft, wenn ein Benutzer mit einem WLAN Gerät am HotSpot nur vorbei läuft. Sollte sich das WLAN Gerät jedoch länger im Bereich des HotSpots aufhalten, so könnte dies als ein Anzeichen für eine potentielle Walk-In Session gewertet werden. Entsprechend könnte die Default Lease-Time erhöht werden um beispielsweise die Anzahl der DHCP-Requests systemweit zu reduzieren und somit Auslastung des DHCP-Services zu reduzieren. Es ist jedoch auch im Fall einer dynamischen Veränderung der Default Lease-Time immer noch bevorzugt, dass die Default Lease Time kleiner sein soll als die Long DHCP Lease-Time. Ebenso kann es im Sinne der Reduzierung der Systemlast des DHCP-Services sinnvoll sein, die Default Lease Time in Abhängigkeit der momentanen DHCP-Pool-Auslastung des HotSpots zu bestimmen: bei einem schwachen frequentierten Standort (viele verfügbare IP-Adressen) wird beispielsweise eine längere Default Lease Time verwendet als bei einem stark frequentierten Standort (wenige verfügbare IP-Adressen).

Durch das erfindungsgemäße Verfahren kann die Service Qualität und die Kapazität von HotSpots verbessert werden. Insbesondere kann dies durch ein erfindungsgemäßes zustandsabhängiges bzw. adaptives IP-Adressmanagement erreicht werden. Ein weiterer Vorteil des erfindungsgemäßen Verfahrens besteht auch darin, dass WLAN Clients (Kunden Equipment) nicht modifiziert werden muss. Vorzugsweise ist es bereits ausreichend, wenn mit den erfindungsgemäßen Änderungen eine bestehende Architektur aus dem Stand der Technik modifiziert wird. Kurzum, das erfindungsgemäße Verfahren und System kann bereits mit bestehenden HotSpots und bestehenden - vorzugsweise ohne Änderung von Hardware - Endgeräten realisiert werden. Auch können bestehende Protokolle, insbesondere das DHCP-Protokoll, unverändert weiter verwendet werden.

Im Folgenden werden bevorzugte Aspekte der vorliegenden Erfindung beispielhaft definiert:
1. Verfahren für ein IP-Adressmanagement an einem drahtlosen Netzzugang (z.B. WLAN), bei dem IP-Adressen mit dem Dynamic Host Configuration Protocol (DHCP) vergeben werden, wobei das Verfahren zumindest folgende Schritte aufweist:
   - Einbuchen eines drahtlosen Endgeräts (z.B. WLAN Client) an dem drahtlosen Netzzugang (z.B. WLAN) und Anfordern einer IP-Adresse (DHCPREQUEST);
   - Bereitstellen und Übermitteln der IP-Adresse mit einer vorbestimmten Lease-Time (default lease time) vom drahtlosen Netzzugang (z.B. WLAN) zum drahtlosen Endgerät (DHCPACK) - im Folgenden IP-Address-Lease genannt;
   dadurch gekennzeichnet, dass bei einem anschließenden Erneuern (DHCP renew) der zuvor bereitgestellten IP-Address-Lease die neue Lease-Time abhängig davon ist, ob das drahtlose Endgerät für die Nutzung bestimmter geschützter Dienste (z.B. Internet-oder Intranet-Dienste) angemeldet wurde oder nicht,
   wobei die Lease-Time der zuvor bereitgestellten IP-Address-Lease des drahtlosen Endgeräts vorzugsweise erst nach einer nachfolgenden erfolgreichen Anmeldung über einen Login-Service von der vorbestimmten Lease-Time (default lease time) auf eine lange Lease-Time (long lease-time) geändert wird, die länger ist als die vorbestimmte Lease-Time (default lease time) und
   bei fehlender erfolgreicher Anmeldung die zuvor bereitgestellte IP-Address-Lease weiterhin mit der vorbestimmten Lease-Time (default lease time) erneuert wird. Mit anderen Worten, erfindungsgemäß erhöht der DHCP-Service vorzugsweise unmittelbar nach der Anmeldung (nach dem Login) - nicht erst bei einer nachfolgenden Erneuerungen (DHCP renew) der kurzen Lease-Time - die Lease-Time auf die lange Lease-Time. Es kann damit verhindert werden, dass ein drahtlose Endgerät nach der erfolgreichen Anmeldung noch eine kurze Lease-Time (default lease time) beibehält, die beispielsweise bei Verlassen des Netzzugangs mit der damit frei gewordene IP-Adresse (mit der falschen kurzen lease time) an ein neues Gerät weitergegen werden könnte. Diese Konstellation könnte ggf. eine Sicherheitslücke darstellen, insbesondere wenn das neue Gerät mit der übernommenen IP-Adresse immer noch Zugriff auf die zuvor vom Vorgänger-Gerät gebuchten Dienste bekommen könnte.
   Zudem ist zu beachten, dass das erfindungsgemäße Verfahren für jegliche Arten von drahtlosen Endgeräten und entsprechenden drahtlosen Netzzugängen verwendet werden kann, solange IP-Adressen über einen DHCP-Service vergeben werden. Mit anderen Worten, das erfindungsgemäße Verfahren ist nicht auf "WLAN" beschränkt, sondern kann auch in einem Mobilfunknetz verwendet bzw. implementiert werden, beispielsweise für GPRS, EDGE, 3G, etc. oder auch Bluetooth, ohne darauf beschränkt zu sein.
2. Verfahren nach Aspekt 1, ferner mit dem Schritt des wiederholten Erneuerns der zuvor bereitgestellten IP-Address-Lease.
3. Verfahren nach Aspekt 2, wobei ein wiederholtes Erneuern (DHCP renew) der Lease-Time (lease time) abhängig davon ist, ob das drahtlose Endgeräts (z.B. WLAN Client) erfolgreich angemeldet ist (eingeloggt) und die IP-Address-Lease mit der langen Lease-Time (long lease-time) erneuert wird, solange das drahtlose Endgerät (z.B. WLAN Client) eingeloggt ist.
4. Verfahren nach Aspekt 2, wobei ein wiederholtes Erneuern (DHCP renew) der Lease-Time (lease time) abhängig davon ist, ob das drahtlose Endgeräts (z.B. WLAN Client) erfolgreich angemeldet ist (eingeloggt) und auf die bestimmten geschützten Dienste zugreift oder nicht und die IP-Address-Lease mit der langen Lease-Time (long lease-time) erneuert wird, solange das drahtlose Endgerät (z.B. WLAN Client) eingeloggt ist und auf die bestimmten geschützten Dienste zugreift.
5. Verfahren nach einem der vorhergehenden Aspekte, wobei der drahtlose Netzzugang ein Public Wireless LAN (PWLAN) bzw. ein HotSpot ist.
6. Verfahren nach einem der vorhergehenden Aspekte, wobei
   - die Lease-Time und IP-Adresse (d.h. die IP-Address-Lease), von einem DHCP-Service bereitgestellt werden, der dem drahtlosen Netzzugang (z.B. WLAN) zugeordnet ist, und
   - die erfolgreiche Anmeldung über den Login-Service, vorzugsweise über eine Nutzerauthentisierung (AAA) erfolgt,
      wobei der DHCP-Service mit dem Login-Service bzw. der Nutzerauthentisierung (AAA) kommuniziert und die Nutzerauthentisierung (AAA) bei erfolgreicher Anmeldung den DHCP-Service dazu veranlasst, der IP-Address-Lease des drahtlosen Endgerät die lange Lease-Time (long lease-time) zuzuordnen und auf Anfrage an das drahtlose Endgerät zu übermitteln.
7. Verfahren nach Aspekt 6, wobei die vorbestimmte Lease-Time von einem DHCP-Service bereitgestellt wird, der dem drahtlosen Netzzugang zugeordnet ist.
8. Verfahren nach Aspekt 6, wobei die lange Lease-Time von einem DHCP-Service bereitgestellt wird, der dem drahtlosen Netzzugang zugeordnet ist.
9. Verfahren nach einem der vorhergehenden Aspekte, wobei der Schritt des Erneuerns einer IP-Address-Lease bzw. Lease-Time innerhalb eines Erneuerungsintervalls, ausgehend vom letzen Anfordern der IP-Address-Lease (DHCPREQUEST), durchgeführt wird, wobei das Erneuerungsintervall kürzer ist als die aktuelle Lease-Time, die entweder die vorbestimmte Lease-Time oder die lange Lease-Time ist, wobei das Erneuerungsintervall vorzugsweise kürzer ist als die Hälfte der aktuellen Lease-Time.
10. Verfahren nach einem der vorhergehenden Aspekte, wobei die vorbestimmte Lease-Time abhängig davon verändert wird, wie oft die vorbestimmte Lease-Time erneuert wird, wobei die vorbestimmte Lease-Time vorzugsweise mit zunehmender Anzahl von Erneuerungen länger wird, jedoch vorzugsweise stets kürzer ist als die lange Lease-Time. Gemäß einem weiteren bevorzugten Aspekt kann es im Sinne der Reduzierung der Systemlast des DHCP-Services sinnvoll sein, die Default Lease Time in Abhängigkeit der momentanen DHCP-Pool-Auslastung des HotSpots zu bestimmen: bei einem schwachen frequentierten Standort (viele verfügbare IP-Adressen) wird beispielsweise eine längere Default Lease Time verwendet als bei einem stark frequentierten Standort (wenige verfügbare IP-Adressen).
11. Verfahren nach einem der vorhergehenden Aspekte, wobei eine lange Lease-Time (long lease-time) zurückgesetzt wird auf eine vorbestimmte Lease-Time wenn das drahtlose Endgerät (z.B. WLAN Client) über den Login-Service abgemeldet wird, wobei die lange Lease-Time vorzugsweise noch gilt, bis zur nächsten Erneuerung der IP-Address-Lease durch das drahtlose Endgeräte. Anders als beim Login, wo sich die Lease-time verlängert, sollte der DHCP-Service nach dem Ausloggen vorzugsweise nicht einseitig die Mietzeit verkürzen ohne dieses dem Endgerät mitzuteilen. Ansonsten würde das Endgerät die folgende Lease-Verlängerung zu spät initiieren und somit seine IP@ ggf. verlieren. Wäre nicht kritisch im ausgeloggten Zustand, aber unschön.
12. Verfahren nach einem der vorstehenden Aspekte, wobei die Lease-Time der zuvor bereitgestellen IP-Address-Lease des drahtlosen Endgeräts unmittelbar nach einer erfolgreichen Anmeldung über einen Login-Service von der vorbestimmten Lease-Time auf eine lange Lease-Time, long lease-time, geändert wird.
13. Datenverarbeitungsprogrammprodukt, das direkt in den internen Speicher eines digitalen Datenverarbeitungssystem geladen werden kann und Softwarecodeabschnitte umfasst, mit denen die entsprechenden Schritte gemäß der Aspekte 1 bis 12 ausgeführt werden, wenn das Produkt in einem Datenverarbeitungssystem läuft.
14. System mit IP-Adressmanagement an einem drahtlosen Netzzugang (z.B. WLAN), bei dem IP-Adressen mit dem Dynamic Host Configuration Protocol (DHCP) vergeben werden, zur Durchführung eines Verfahrens nach einem der Aspekte 1 bis 12, wobei das System zumindest folgende Einrichtungen aufweist:
   - einen DHCP Service zum Bereitstellen und Übermitteln von IP-Adressen mit einer Lease-Time (IP-Address-Lease) vom drahtlosen Netzzugang (z.B. WLAN) zu einem drahtlosen Endgerät (z.B. WLAN Client);
   - einen Login-Service, wobei das drahtlose Endgerät bei einer erfolgreichen Anmeldung über den Login-Service Zugriff auf bestimmte geschützte Dienste erhält,
   **dadurch gekennzeichnet, dass**
   das System eingerichtet ist, dass eine Kommunikation zwischen DHCP Service und Login-Service stattfinden kann und die Lease-Time vom DHCP Service basierend auf dem Login-Zustand der IP-Address-Lease, welcher zwischen DHCP Service und Login-Service ausgetauscht wird, vergeben wird.
15. System nach Aspekt 14, wobei der DHCP Service
   a. an das drahtlose Endgerät (z.B. WLAN Client) bei fehlender erfolgreicher Anmeldung eine vorbestimmte Lease-Time (default lease time) übermittelt, und
   b. an das drahtlose Endgerät (z.B. WLAN Client) nach einer erfolgreichen Anmeldung eine lange Lease-Time (long lease-time) übermittelt, die länger ist als die vorbestimmte Lease-Time.

### KURZE BESCHREIBUNG DER ZEICHNUNGEN

Im Folgenden werden bevorzugte Ausführungsformen der vorliegenden Erfindung unter Bezugnahme auf die Figuren ausführlicher beschrieben. Es zeigen:
Fig. 1 ein übliches HotSpot-Szenario aus dem Stand der Technik sowie den Ablauf nötigen Aktionen 1) - 4) bis zu einer Internetnutzung durch ein WLAN Gerät;
Fig. 2 den für den Walk-By-Effekt typischen Verlauf der IP-Adressauslastung im Vergleich zu den tatsächlichen HotSpot Sessions an einer stark frequentierten HotSpot Lokation im öffentlichen Raum;
Fig. 3 eine schematische Darstellung einer ersten Ausführungsform des erfindungsgemäßen Verfahrens für "Walk-In" Geräte;
Fig. 4 eine schematische Darstellung einer ersten Ausführungsform des erfindungsgemäßen Verfahrens für "Walk-By" Geräte; und
Fig. 5 ein Ausführungsbeispiel einer erfindungsgemäßen Architektur.

### DETAILLIERTE BESCHREIBUNG BEVORZUGTER AUSFÜHRUNGSFORMEN

Im Folgenden wird die Vergabe einer IP Adresse nach dem Dynamic Host Configuration Protocol IETF RFC 2131 beschrieben, ohne jedoch darauf beschränkt zu sein. Insbesondere wird das erfindungsgemäße Verfahren am Beispiel eines WLAN Netzes beschrieben, ohne darauf beschränkt zu sein. Beispielsweise kann das erfindungsgemäße Verfahren auch bei anderen drahtlosen Netzen verwendet werden, wenn eine IP-Adresse bzw. ein IP-Address-Lease mittels DHCP vergeben wird.

Wenn ein WLAN Client erstmals eine IP-Adresse benötigt, schickt er eine DHCPDISCOVER-Nachricht (mit seiner MAC-Adresse) als Netzwerk-Broadcast an die verfügbaren DHCP-Server (es kann auch mehrere davon im gleichen Subnetz geben). Dieser Broadcast hat als Absender-IP-Adresse 0.0.0.0 und als Zieladresse 255.255.255.255, da der Absender noch keine IP-Adresse besitzt und seine Anfrage "an alle" richtet. Ein DHCP-Server antwortet mit DHCPOFFER und macht Vorschläge für eine IP-Adresse. Das geschieht ebenfalls mit einem Broadcast an die Adresse 255.255.255.255. Der WLAN Client darf nun unter den eingetroffenen Angeboten (DHCP-Offers) wählen. Wenn er sich für eines entschieden hat, kontaktiert er per Broadcast und einem im Paket enthaltenen Serveridentifier den entsprechenden Server mit der Nachricht DHCPREQUEST. Alle eventuellen weiteren DHCP-Server werten das als Absage für ihre Angebote. Der vom Client ausgewählte Server bestätigt in einer DHCPACK-Nachricht (DHCP-Acknowledged) die IP-Adresse mit den weiteren relevanten Daten, oder er zieht sein Angebot zurück (DHCPNAK).

Zusammen mit der IP-Adresse erhält der Client in der DHCPACK-Nachricht die Lease-Time. Das ist ein Zeitwert, der angibt, wie lange der Client die zugewiesene IP-Konfiguration verwenden darf. Dieser Zeitwert wird im Stand der Technik vom Administrator des DHCP-Servers eingestellt. Der Standard sieht zudem vor, dass der Client üblicherweise nach der Hälfte der Lease-Time einen erneuten DHCPREQUEST sendet und so bekundet, dass weiteres Interesse an der reservierten IP-Adresse besteht. Dieser DHCPREQUEST wird per Unicast an den DHCP-Server gesendet, der die IP-Konfiguration vergeben hat. Der Server sollte dann in der Regel ein DHCPACK mit identischen Daten wie vorher, aber einer neu gestarteten Lease-Time senden. Damit gilt die IP-Adresse als verlängert.

Sollte der Client es versäumen, bis zum Ablauf der Lease-Time eine Verlängerung zu beantragen, muss er seine Netzwerkkarte dekonfigurieren und wieder bei DHCPDISCOVER mit einer initialen Adresszuweisung beginnen. Sollte der DHCP-Server keine Adressen mehr zur Verfügung haben oder während des Vorganges schon ein anderer Client seine letzte Adresse zugesagt bekommen haben, sendet der Server ein DHCPNAK (DHCP-Not Acknowledged) und der Vorgang der Adressanfrage beginnt erneut. Im Folgenden werden typische Befehle des Dynamic Host Configuration Protocol (DHCP) kurz aufgelistet:
- DHCPDISCOVER: Ein Client ohne IP-Adresse sendet eine Broadcast-Anfrage nach Adress-Angeboten an den/die DHCP-Server im lokalen Netz.
- DHCPOFFER: Der/die DHCP-Server antworten mit entsprechenden Werten auf eine DHCPDISCOVER-Anfrage.
- DHCPREQUEST: Der Client fordert (eine der angebotenen) IP-Adresse(n), weitere Daten sowie Verlängerung der Lease-Time von einem der antwortenden DHCP-Server.
- DHCPACK: Bestätigung des DHCP-Servers zu einer DHCPREQUEST-Anforderung
- DHCPNAK: Ablehnung einer DHCPREQUEST-Anforderung durch den DHCP-Server
- DHCPRELEASE: Der Client gibt die eigene Konfiguration frei, damit die Parameter wieder für andere Clients zur Verfügung stehen.
- DHCPINFORM: Anfrage eines Clients nach Daten ohne IP-Adresse, z. B. weil der Client eine statische IP-Adresse besitzt.

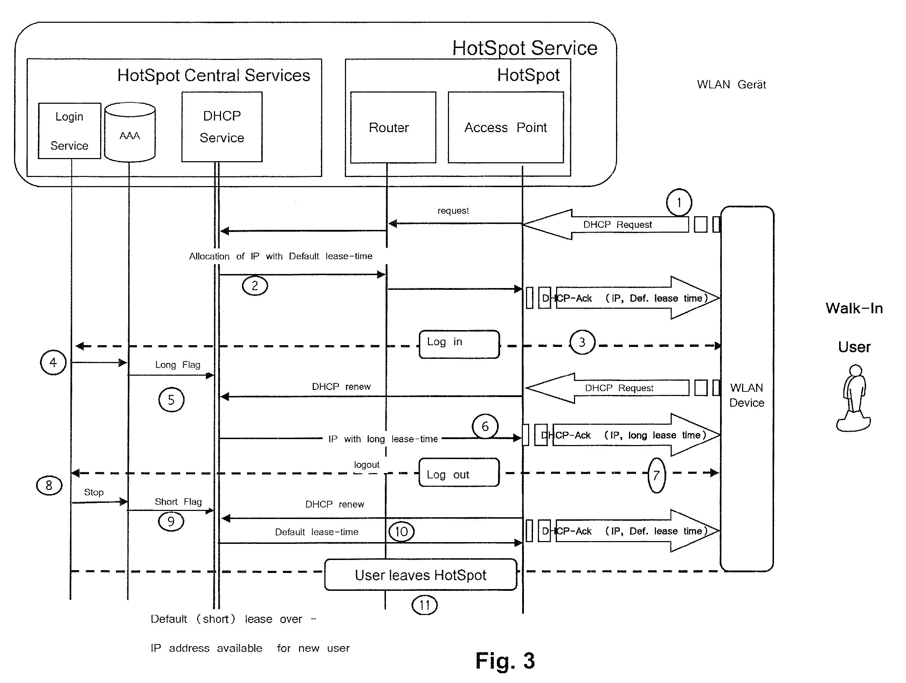

Figur 3 zeigt beispielhaft Verfahrensschritte eines ersten erfindungsgemäßen Verfahrens, insbesondere den Fall eines Walk-In Geräts. Die in Fig. 3 dargestellte Schritte 1-11 können wie folgt beschrieben werden.
1. WLAN-Gerät (WLAN Device) bucht sich ins WLAN des HotSpots ein und fordert mit einer DHCP-Anfrage bzw. einem DHCP-Request eine IP-Adresse an **(*DHCP Request*).**
2. WLAN-Gerät bekommt gemäß der Erfindung immer eine IP-Adresse mit default lease-time (vorgegebene lease-time; vorgegebene "Mietzeit"), wobei die default lease-time eine kurze bzw. kürzere Leasetime ist **(*DHCP-Ack (IP, Def. lease time)*)*.*** WLAN-Gerät verlängert (DHCP-Renew) ggf. die IP-Adresse in neuem kürzeren Intervall (halbe default lease-time - z.B. 1 min).
3. Nutzer des WLAN-Gerätes loggt sich am Login Service ein um auf Internet Dienste zugreifen zu können **(*Log in*)***.*
4. Ein Login-Service, bzw. ein AAA Service (Nutzerauthentisierung; Authentication, Authorization and Accounting), der beispielsweise ein Teil eines Login Service sein kann, generiert ein "Start" Signal bei erfolgreichem Login.
5. Durch die erfindungsgemäße Kommunikation zwischen DHCP-Service und AAA bzw. Login-Service wird bei erfolgreichem Login im DHCP-Service die Lease-time der angegebenen IP-Adresse auf long lease-time geändert **(*Long Flag*),** wobei die Dauer der long lease-time länger ist als der default lease-time.
6. Beim nächsten Verlängern **(*DHCP renew*)** der Lease-Time durch den WLAN-Client (DHCP Request) antwortet **(*DHCP-Ack)*** der DHCP-Service mit der long-lease-time → WLAN-Gerät erneuert nun in längerem Intervall, beispielsweise mit einer halben long lease-time; long lease-time /2, beispielsweise ca.15 min).
7. Nutzer an WLAN-Gerät loggt sich am Login Service aus **(*Log out*)*.***
8. AAA Service generiert "Stop" Signal.
9. Durch die erfindungsgemäße Kommunikation zwischen DHCP-Service und AAA bzw. Login-Service wird im DHCP-Service die IP-Address-Lease als ausgeloggt markiert **(*Short-Flag*)*,*** die Lease-time der angegebenen IP-Adresse aber noch auf dem bisher gültigen long lease-time belassen. Insbesondere ist es bevorzugt, dass nach Ausloggen der DHCP-Service nicht einseitig die Mietzeit verkürzt, ohne dieses dem Endgerät mitzuteilen.
10. Beim nächsten Verlängern **(*DHCP renew*)** der Lease-Time durch den WLAN-Client antwortet ***(DHCP-Ack* (*IP, Def. lease time)*)** der DHCP-Service wieder mit der kürzeren default lease-time.
11. WLAN-Gerät verlängert (DHCP-Renew) nun wieder in kürzerem Intervall (default-lease-time/2). Beim Verlassen des HotSpot steht die IP-Adresse bereits nach der kürzeren default lease-time wieder zur Verfügung.

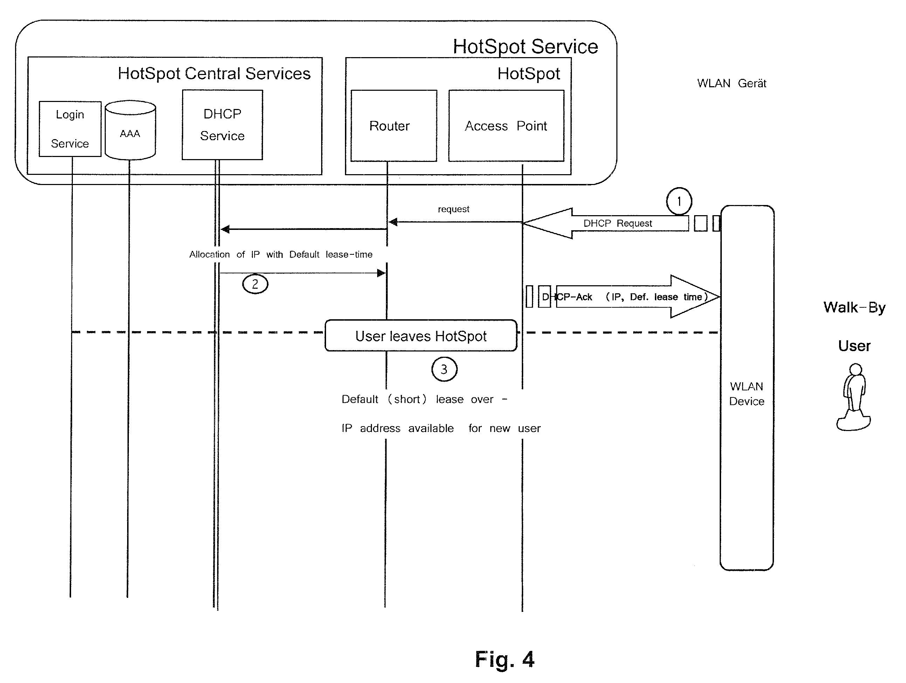

Figur 4 zeigt beispielhaft eine erste erfindungsgemäße Ausführungsform für den Fall eines "Walk-By" Geräts. Die in Fig. 4 dargestellten Schritte 1-3 können wie folgt beschrieben werden:
1. WLAN-Gerät (***WLAN Device*)** bucht sich ins WLAN des HotSpots ein und fordert mit DHCP Request eine IP-Adresse an **(*DHCP Request*)*.***
2. WLAN-Gerät bekommt gemäß der Erfindung immer eine IP-Adresse mit default lease-time (kürzere Lease-time). WLAN-Gerät verlängert (DHCP-renew) die IP-Adresse in neuem kürzeren Intervall (halbe default lease-time - z.B. 1 min).
3. Beim Verlassen des HotSpot steht die IP-Adresse bereits nach der default lease-time wieder zur Verfügung.

Gegenüber den bekannten Verfahren zum IP-Adressmanagement von HotSpots bietet die Erfindung beispielsweise folgende Vorteile.

Der HotSpot Betreiber kann den HotSpot besser auslasten, es gibt weniger Abweisungen von Kunden. Aufgrund des effizienten IP Address-Managements ist IPv4 länger nutzbar. Selbst nach Umstieg auf IPv6 wird der Adressraum effizienter und somit ökonomischer genutzt. Schließlich können ggf. auch Hardware Kosten eingespart werden.

Neben den Vorteilen für HotSpot Betreiber ergeben sich auch Vorteile für den Endkunden. Insbesondere wird durch das erfindungsgemäße Verfahren eine bessere HotSpot Service Qualität bereitgestellt. Zudem erhalten Endkunden weniger Abweisungen bei Login Versuchen.

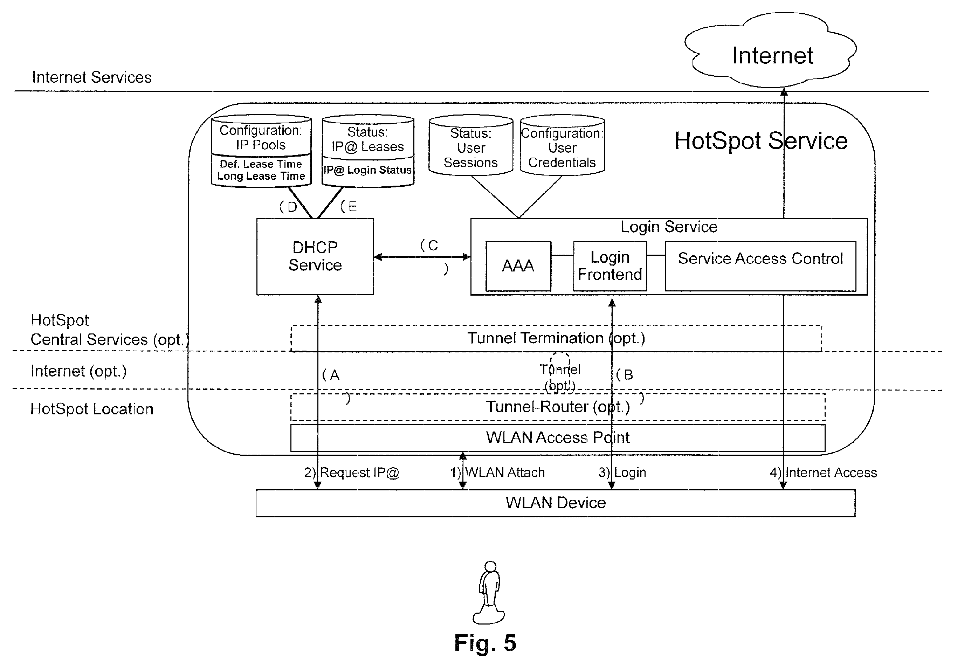

Figur 5 zeigt beispielhaft den Aufbau einer erfindungsgemäßen Architektur.
A IP-Autokonfigurationsschnittstelle zwischen WLAN Device und DHCP Service
B Login-Schnittstelle zwischen WLAN Device und Login-Service
C Schnittstelle zwischen DHCP Service und AAA Service bzw. Login-Service, die unterschiedlich realisierbar sein kann:
   - Abfragen des Status der IP-Adresse beim Login-Service bzw. beim Service Access Control Service oder einem nach gelagerten AAA Service durch den DHCP-Server (Pull);
   - Übermitteln von Login-Events und Logout-Events vom Login Server, Service Access Control Services oder eines nachgelagerten AAA-Servers an den DHCP Service (Trigger);
   - Abfragen einer Session Datenbank des Login-Services oder nachgelagerten AAA Services durch den DHCP Service (Pull);
   - Übermitteln von Login-Events und Logout-Events vom Login Server, Service Access Control Services oder einem nachgelagerten AAA-Servers an ein DHCP-Lease Datenbank des DHCP-Servers
D Erweiterung der DHCP-Service Konfiguration: der DHCP-Service vergibt abhängig vom Zustand der IP-Adresse (mit oder ohne HotSpot Session) eine der beiden Lease-Time:
   - IP-Adresse ohne HotSpot Session → default Lease-Time;
   - IP-Adresse mit HotSpot Session → Long Lease-Time;
E Erweiterung der Zustandsverwaltung des DHCP-Service: Verwaltung des Status einer IP Adresse
   - IP-Adresse ohne HotSpot Session
   - IP-Adresse mit HotSpot Session

Die Erfindung umfasst ebenfalls die genauen oder exakten Ausdrücke, Merkmale, numerischen Werte oder Bereiche usw., wenn vorstehend oder nachfolgend diese Ausdrücke, Merkmale, numerischen Werte oder Bereiche im Zusammenhang mit Ausdrücken wie z.B. ,, etwa, ca., um, im Wesentlichen, im Allgemeinen, zumindest, mindestens" usw. genannt wurden (also "etwa 3" soll ebenfalls "3" oder "im Wesentlichen radial" soll auch "radial" umfassen). Der Ausdruck "bzw." bedeutet überdies "und/oder".

## Patentansprüche

1. Verfahren für IP-Adressmanagement an einem drahtlosen Netzzugang, z.B. WLAN, bei dem IP-Adressen mit dem Dynamic Host Configuration Protocol, DHCP, vergeben werden, wobei das Verfahren zumindest folgende Schritte aufweist:
• Einbuchen eines drahtlosen Endgeräts an dem drahtlosen Netzzugang und Anfordern einer IP-Adresse;
• Bereitstellen und Übermitteln der IP-Adresse mit einer vorbestimmten Lease-Time, default lease time, vom drahtlosen Netzzugang zum drahtlosen Endgerät - im Folgenden IP-Address-Lease genannt;
**dadurch gekennzeichnet, dass**
bei einem anschließenden Erneuern der zuvor bereitgestellten IP-Address-Lease die neue Lease-Time abhängig davon ist, ob das drahtlose Endgerät sich für die Nutzung bestimmter geschützter Dienste angemeldet hat oder nicht,
wobei die Lease-Time der zuvor bereitgestellen IP-Address-Lease des drahtlosen Endgeräts nachfolgend nach einer erfolgreichen Anmeldung über einen Login-Service von der vorbestimmten Lease-Time auf eine lange Lease-Time, long lease-time, geändert wird, die länger ist als die vorbestimmte Lease-Time und
bei fehlender erfolgreicher Anmeldung die zuvor bereitgestellte IP-Address-Lease weiterhin mit der vorbestimmten Lease-Time erneuert wird.

2. Verfahren nach Anspruch 1, ferner mit dem Schritt des wiederholten Erneuerns der zuvor bereitgestellten IP-Address-Lease.

3. Verfahren nach Anspruch 2, wobei ein wiederholtes Erneuern der Lease-Time abhängig davon ist, ob das drahtlose Endgerät erfolgreich angemeldet wurde und die IP-Address-Lease mit der langen Lease-Time erneuert wird, solange das drahtlose Endgerät erfolgreich angemeldet bleibt.

4. Verfahren nach Anspruch 2, wobei ein wiederholtes Erneuern der Lease-Time abhängig davon ist, ob das drahtlose Endgerät erfolgreich angemeldet wurde und auf die bestimmten geschützten Dienste zugreift oder nicht und die IP-Address-Lease mit der langen Lease-Time erneuert wird, solange das drahtlose Endgerät erfolgreich angemeldet bleibt und auf die bestimmten geschützten Dienste zugreift.

5. Verfahren nach einem der vorstehenden Ansprüche, wobei der drahtlose Netzzugang ein Public Wireless LAN bzw. ein HotSpot ist.

6. Verfahren nach einem der vorhergehenden Ansprüche, wobei
• die IP-Address-Lease und die IP-Adresse von einem DHCP-Service bereitgestellt werden, der dem drahtlosen Netzzugang zugeordnet ist, und
• die erfolgreiche Anmeldung über den Login-Service über eine Nutzerauthentisierung erfolgt,
wobei der DHCP-Service mit dem Login-Service bzw. der Nutzerauthentisierung kommuniziert und der Login-Service bzw. die Nutzerauthentisierung bei erfolgreicher Anmeldung den DHCP-Service dazu veranlasst, die lange Lease-Time an das drahtlose Endgerät zu übermitteln.

7. Verfahren nach Anspruch 6, wobei die vorbestimmte Lease-Time von einem DHCP-Service bereitgestellt wird, der dem drahtlosen Netzzugang zugeordnet ist.

8. Verfahren nach Anspruch 6 oder 7, wobei die lange Lease-Time von einem DHCP-Service bereitgestellt wird, der dem drahtlosen Netzzugang zugeordnet ist.

9. Verfahren nach einem der vorhergehenden Ansprüche, wobei der Schritt des Erneuerns einer Lease-Time innerhalb eines Erneuerungsintervalls, ausgehend vom letzen. Anfordern der IP-Address-Lease, durchgeführt wird, wobei das Erneuerungsintervall kürzer ist als die aktuelle Lease-Time, die entweder die vorbestimmte Lease-Time oder die lange Lease-Time ist, wobei das Erneuerungsintervall kürzer ist als die Hälfte der aktuellen Lease-Time.

10. Verfahren nach einem der vorhergehenden Ansprüche, wobei die vorbestimmte Lease-Time abhängig davon verändert wird, wie oft die vorbestimmte Lease-Time erneuert wird, bzw. in Abhängigkeit einer momentanen DHCP-Pool-Auslastung erneuert wird, wobei die vorbestimmte Lease-Time jedoch stets kürzer ist als die lange Lease-Time.

11. Verfahren nach einem der vorhergehenden Ansprüche, wobei eine lange Lease-Time zurückgesetzt wird auf eine vorbestimmte Lease-Time wenn das drahtlose Endgerät über den Login-Service abgemeldet wird, wobei die lange Lease-Time noch gilt, bis zur nächsten Erneuerung der IP-Address-Lease durch das drahtlose Endgerät.

12. Verfahren nach einem der vorstehenden Ansprüche, wobei die Lease-Time der zuvor bereitgestellen IP-Address-Lease des drahtlosen Endgeräts unmittelbar nach einer erfolgreichen Anmeldung über einen Login-Service von der vorbestimmten Lease-Time auf eine lange Lease-Time, long lease-time, geändert wird.

13. Datenverarbeitungsprogrammprodukt, das direkt in den internen Speicher eines digitalen Datenverarbeitungssystems geladen werden kann und Softwarecodeabschnitte umfasst, mit denen die entsprechenden Schritte gemäß der Ansprüche 1 bis 12 ausgeführt werden, wenn das Produkt in einem Datenverarbeitungssystem läuft.

14. System mit IP-Adressmanagement an einem drahtlosen Netzzugang, bei dem IP-Adressen mit dem Dynamic Host Configuration Protocol, DHCP, vergeben werden, zur Durchführung eines Verfahrens nach einem der Ansprüche 1 bis 12, wobei das System zumindest folgende Einrichtungen aufweist:
• einen DHCP Service zum Bereitstellen und Übermitteln von IP-Adressen mit einer Lease-Time vom drahtlosen Netzzugang zu einem drahtlosen Endgerät;
• einen Login-Service, wobei das drahtlose Endgerät bei einer erfolgreichen Anmeldung über den Login-Service Zugriff auf bestimmte geschützte Dienste erhält,
**wobei**
das System eingerichtet ist, dass eine Kommunikation zwischen DHCP Service und Login-Service stattfinden kann und die Lease-Time vom DHCP Service basierend auf dem Login-Zustand der IP-Address-Lease, welcher zwischen DHCP Service und Login-Service ausgetauscht wird, vergeben wird.

15. System nach Anspruch 14, wobei der DHCP Service
a. an das drahtlose Endgerät bei fehlender erfolgreicher Anmeldung eine vorbestimmte Lease-Time übermittelt, und
b. an das drahtlose Endgerät nach einer erfolgreichen Anmeldung eine lange Lease-Time übermittelt, die länger ist als die vorbestimmte Lease-Time.

## Claims

1. A method for IP address management at a wireless network port, such as WLAN, in which IP addresses are assigned using the Dynamic Host Configuration Protocol, DHCP, the method comprising at least the following steps:
• logging a wireless terminal into the wireless network port and requesting an IP address;
• providing and communicating the IP address with a default lease time from the wireless network port to the wireless terminal - hereinafter referred to as IP address lease;
**characterised in that**
upon a subsequent renewal of the previously provided IP address lease, the new lease time depends on whether or not the wireless terminal has been logged in for using certain protected services;
wherein upon a successful login via a login service, the lease time of the previously provided IP address lease of the wireless terminal is changed from the default lease time to a long lease time that is longer than the default lease time and,
if the login is not successful, the previously provided IP address lease is continued to be renewed with the default lease time.

2. The method of clam 1, further comprising the step of a repeated renewal of the previously provided IP address lease.

3. The method of claim 2, wherein a repeated renewal of the lease time depends on whether the login of the wireless terminal has been successful and the IP address lease is renewed with the long lease time as long as the login of the wireless terminal remains successful.

4. The method of claim 2, wherein a repeated renewal of the lease time depends on whether the login of the wireless terminal has been successful and whether or not the wireless terminal accesses the certain protected services and the IP address lease is renewed with the long lease time, as long as the login of the wireless terminal remains successful and the wireless terminal accesses the certain protected services.

5. The method of any of the preceding claims, wherein the wireless network port is a public wireless LAN or a hotspot.

6. The method of any of the preceding claims, wherein
• the IP address lease and the IP address are provided by a DHCP service that is assigned to the wireless network port and
• the successful login via the login service is achieved by a user authentication, wherein the DHCP service communicates with the login service and/or the user authentication and the login service and/or the user authentication prompt(s) the DHCP service to communicate the long lease time to the wireless terminal if the login has been successful.

7. The method of claim 6, wherein the default lease time is provided by a DHCP service assigned to the wireless network port.

8. The method of claim 6 or 7, wherein the long lease time is provided by a DHCP service assigned to the wireless network port.

9. The method of any of the preceding claims wherein the step of renewing a lease time is performed within a renewal interval on the basis of the most recent IP address lease request, wherein the renewal interval is shorter than the current lease time, which is either the default lease time or the long lease time, wherein the renewal interval is shorter than half the current lease time.

10. The method according to any of the preceding claims, wherein the default lease time is changed as a function of the number of default lease time renewals and/or as a function of a current DHCP pool utilisation, wherein the default lease time, however, is always shorter than the long lease time.

11. The method of any of the preceding claims, wherein a long lease time is reset to a default lease time, if the wireless terminal is logged in via the login service, wherein the long lease time is effective till the next renewal of the IP address lease by the wireless terminal.

12. The method of any of the preceding claims, wherein the lease time of the previously provided IP address lease of the wireless terminal is changed immediately in response to a successful login via a login service from the default lease time to a long lease time.

13. A data processing program product that can directly be uploaded into the internal memory of a digital data processing system and comprises software code portions with which the respective steps according to claims 1 to 12 are executed if the product is operated in a data processing system.

14. A system comprising IP address management at a wireless network port, wherein IP addresses are assigned using the Dynamic Host Configuration Protocol, DHCP, for carrying out a method according to any of claims 1 to 12, the system comprising at least the following means:
• a DHCP service for providing and communicating IP addresses with a lease time from the wireless network port to a wireless terminal;
• a login service, wherein the wireless terminal is granted access to certain protected services in case of a successful login via the login service,
wherein
the service is configured such that a communication between DHCP service and login service is possible and the lease time is assigned by the DHCP service on the basis of the login state of the IP address lease exchanged between DHCP service and login service.

15. The system of claim 14, wherein the DHCP service
a) communicates a default lease time to the wireless terminal if the login has not been successful and
b) communicates a long lease time that is longer than the default lease time to the wireless terminal, if the login is successful.

## Revendications

1. Procédé de gestion d'adresses IP au niveau d'un accès à un réseau sans fil, par exemple WLAN, dans lequel des adresses IP sont attribuées avec le protocole de configuration dynamique d'hôte, DHCP, le procédé présentant au moins les étapes suivantes :
- enregistrement d'un terminal sans fil au niveau de l'accès au réseau sans fil et demande d'une adresse IP ;
- mise à disposition et transmission de l'adresse IP avec une durée du bail prédéfinie, durée du bail par défaut, de l'accès au réseau sans fil au terminal sans fil - appelé ci-après bail de l'adresse IP ;
**caractérisé en ce que**
lors d'un renouvellement ultérieur du bail de l'adresse IP mis à disposition auparavant, la nouvelle durée du bail dépend du fait si le terminal sans fil s'est connecté ou non pour l'utilisation de services protégés donnés,
dans lequel la durée du bail de l'adresse IP mis à disposition auparavant du terminal sans fil est modifiée ensuite après une connexion réussie via un service de connexion de la durée du bail prédéfinie à une durée du bail longue, long lease-time, qui est plus longue que la durée du bail prédéfinie et
en l'absence d'une connexion réussie, le bail de l'adresse IP mis à disposition auparavant continue d'être renouvelé avec la durée du bail prédéfinie.

2. Procédé selon la revendication 1, avec en plus l'étape du renouvellement répété du bail de l'adresse IP mis à disposition auparavant.

3. Procédé selon la revendication 2, dans lequel un renouvellement répété de la durée du bail dépend du fait si le terminal sans fil a été connecté avec succès et si le bail de l'adresse IP est renouvelé avec la durée du bail longue, aussi longtemps que le terminal sans fil reste connecté avec succès.

4. Procédé selon la revendication 2, dans lequel un renouvellement répété de la durée du bail dépend du fait si le terminal sans fil a été connecté avec succès et s'il accède ou non aux services protégés donnés et si le bail de l'adresse IP est renouvelé avec la durée du bail longue, aussi longtemps que le terminal sans fil reste connecté avec succès et accède aux services protégés donnés.

5. Procédé selon l'une quelconque des revendications précédentes, dans lequel l'accès au réseau sans fil est un réseau WLAN public ou un hotspot.

6. Procédé selon l'une quelconque des revendications précédentes, dans lequel
- le bail de l'adresse IP et l'adresse IP sont mis à disposition par un service DHCP, qui est affecté à l'accès au réseau sans fil, et
- la connexion réussie se fait via le service de connexion via une authentification de l'utilisateur,
dans lequel le service DHCP communique avec le service de connexion ou l'authentification de l'utilisateur et le service de connexion ou l'authentification de l'utilisateur amène, en cas de connexion réussie, le service DHCP à transmettre la durée du bail longue au terminal sans fil.

7. Procédé selon la revendication 6, dans lequel la durée du bail prédéfinie est mise à disposition par un service DHCP, qui est affecté à l'accès au réseau sans fil.

8. Procédé selon la revendication 6 ou 7, dans lequel la durée du bail longue est mise à disposition par un service DHCP qui est affecté à l'accès au réseau sans fil.

9. Procédé selon l'une quelconque des revendications précédentes, dans lequel l'étape du renouvellement d'une durée du bail est réalisée dans un intervalle de renouvellement, partant de la dernière demande du bail de l'adresse IP, dans lequel l'intervalle de renouvellement est plus court que la durée du bail actuelle qui est soit la durée du bail prédéfinie soit la durée du bail longue, dans lequel l'intervalle de renouvellement est plus court que la moitié de la durée du bail actuelle.

10. Procédé selon l'une quelconque des revendications précédentes, dans lequel la durée du bail prédéfinie est modifiée en fonction du nombre de renouvellements de la durée du bail prédéfinie ou en fonction d'une utilisation momentanée du pool DHCP, dans lequel la durée du bail prédéfinie est cependant toujours plus courte que la durée du bail longue.

11. Procédé selon l'une quelconque des revendications précédentes, dans lequel une durée du bail longue est réinitialisée à une durée du bail prédéfinie lorsque le terminal sans fil est déconnecté via le service de connexion, dans lequel la durée du bail longue est encore valable jusqu'au prochain renouvellement du bail de l'adresse IP par le terminal sans fil.

12. Procédé selon l'une quelconque des revendications précédentes, dans lequel la durée du bail de l'adresse IP mis à disposition auparavant du terminal sans fil est modifiée immédiatement après une connexion réussie via un service de connexion de la durée du bail prédéfinie à une durée du bail longue, long lease-time.

13. Produit pour programme de traitement des données qui peut être chargé directement dans la mémoire interne d'un système numérique de traitement des données et comprend des sections de code de logiciel, avec lesquelles les étapes correspondantes sont réalisées selon les revendications 1 à 12, lorsque le produit fonctionne dans un système de traitement des données.

14. Système avec gestion d'adresses IP au niveau d'un accès à un réseau sans fil, dans lequel des adresses IP sont attribuées avec le protocole de configuration dynamique d'hôte, DHCP, pour la réalisation d'un procédé selon l'une quelconque des revendications 1 à 12, le système présentant au moins les équipements suivants :
- un service DHCP pour la mise à disposition et la transmission d'adresses IP avec une durée du bail de l'accès au réseau sans fil à un terminal sans fil ;
- un service de connexion, dans lequel le terminal sans fil a, en cas de connexion réussie via le service de connexion, accès à des services protégés donnés,
dans lequel
le système est aménagé de telle sorte qu'une communication peut avoir lieu entre le service DHCP et le service de connexion et la durée du bail est attribuée par le service DHCP sur la base de l'état de connexion du bail de l'adresse IP, qui est échangé entre le service DHCP et le service de connexion.

15. Système selon la revendication 14, dans lequel le service DHCP
a. transmet une durée du bail prédéfinie au terminal sans fil en l'absence d'une connexion réussie, et
b. transmet une durée du bail longue au terminal sans fil après une connexion réussie, qui est plus longue que la durée du bail prédéfinie.
